(19) Europäisches Patentamt
European Patent Office
Office européen des brevets

(11) **EP 1 477 004 B1**

(12) **FASCICULE DE BREVET EUROPEEN**

(45) Date de publication et mention
de la délivrance du brevet:
**01.12.2010  Bulletin 2010/48**

(21) Numéro de dépôt: **03720613.3**

(22) Date de dépôt: **14.02.2003**

(51) Int Cl.:
***H04L 27/20*** *(2006.01)*

(86) Numéro de dépôt international:
**PCT/FR2003/000487**

(87) Numéro de publication internationale:
**WO 2003/071757 (28.08.2003 Gazette 2003/35)**

(54) **MODULATEUR DE FREQUENCE POUR TRANSMISSION NUMERIQUES**

FREQUENZMODULATOR FÜR DIGITALE ÜBERTRAGUNGEN

FREQUENCY MODULATOR FOR DIGITAL TRANSMISSIONS

(84) Etats contractants désignés:
**DE FR NL**

(30) Priorité:  **22.02.2002  FR 0202304**

(43) Date de publication de la demande:
**17.11.2004  Bulletin 2004/47**

(73) Titulaire: **Qualcomm Incorporated
San Diego, CA 92121 (US)**

(72) Inventeurs:
• **DUSSARAT, Gérard,
Thales Intellectual Property
F-94117 Arcueil cedex (FR)**
• **BOURASSEAU, Daniel,
Thales Intellectual Property
F-94117 Arcueil Cedex (FR)**

(74) Mandataire: **Wagner & Geyer
Partnerschaft
Patent- und Rechtsanwälte
Gewürzmühlstrasse 5
80538 München (DE)**

(56) Documents cités:
**EP-A- 0 822 421    US-A- 5 216 391
US-A- 5 812 604    US-A- 5 884 220**

**EP 1 477 004 B1**

### Description

L'invention concerne un procédé de transmission de données numériques au moyen d'un modulateur de fréquence basé sur une modulation de fréquence de type à gradient de phase minimum ou « Minimum Shift Keying » (MSK) en anglais.

L'invention a également pour objet le dispositif correspondant.

L'invention s'applique à toutes les transmissions de données numériques utilisant la modulation de fréquence de type MSK.

Elle s'applique notamment à la détermination précise de la position d'un mobile à partir de données nécessaires transmises entre une station de référence et le mobile, tous deux recevant des signaux de positionnement par satellites.

Le document US 5,216,391 A décrit un modulateur de type MSK.

Pour la détermination de la position absolue d'un mobile, on utilise couramment des moyens de mesure de position par satellites, utilisant par exemple les signaux radio émis par les satellites du système GPS (Global Positioning System) ou d'autres systèmes analogues (système GLONASS, futur système GALILEO). La précision obtenue va de quelques mètres à quelques dizaines de mètres.

Dans le système GPS, le signal émis par un satellite est codé et on utilise le temps mis par ce signal pour atteindre le point à localiser pour déterminer la distance entre ce satellite et ce point, de préférence appelée pseudo-distance pour tenir compte d'erreurs de synchronisation entre l'horloge du satellite et celle de la station. Ces erreurs de synchronisation sont classiquement éliminées par calcul dès lors qu'on reçoit les signaux d'au moins quatre satellites différents. La détermination de la distance entre le point à localiser et plusieurs satellites permet, connaissant les coordonnées géographiques des satellites, de calculer les coordonnées du point à localiser, le plus souvent des coordonnées exprimées en latitude, longitude et altitude dans un repère terrestre fixe.

Pour déterminer la position précise d'un mobile (précision de un centimètre à un mètre selon le cas) on utilise une méthode dite « GPS différentiel » qui consiste à utiliser au niveau du mobile, pour le calcul de sa position, les erreurs constatées sur chaque pseudo-distance au niveau d'une station dite de référence de position connue.

Cette méthode permet de corriger les erreurs de calcul de position dues notamment aux déformations de trajectoire et à la propagation. Ces erreurs sont corrigées par exemple en comparant pour la station de référence sa position connue et sa position calculée issue de la mesure du temps de propagation entre le satellite et la station de référence.

Les données numériques correspondant à ces erreurs sont transmises par la station de référence au mobile. Traditionnellement, ces données numériques sont transmises par voie radio en utilisant une modulation de fréquence de type MSK, bien adaptée pour un débit d'informations pouvant atteindre 200 bauds (bits par secondes).

Pour des débits d'informations supérieurs, tels que 400 bauds, la modulation de fréquence de type MSK n'est plus adaptée car elle présente un spectre en fréquence trop large et de décroissance trop lente.

On rappelle en effet que plus les spectres des stations de référence sont étroits et à décroissance rapide, plus on peut en juxtaposer sur une même bande de fréquence sans qu'ils empiètent les uns sur les autres et ainsi multiplier les stations de référence.

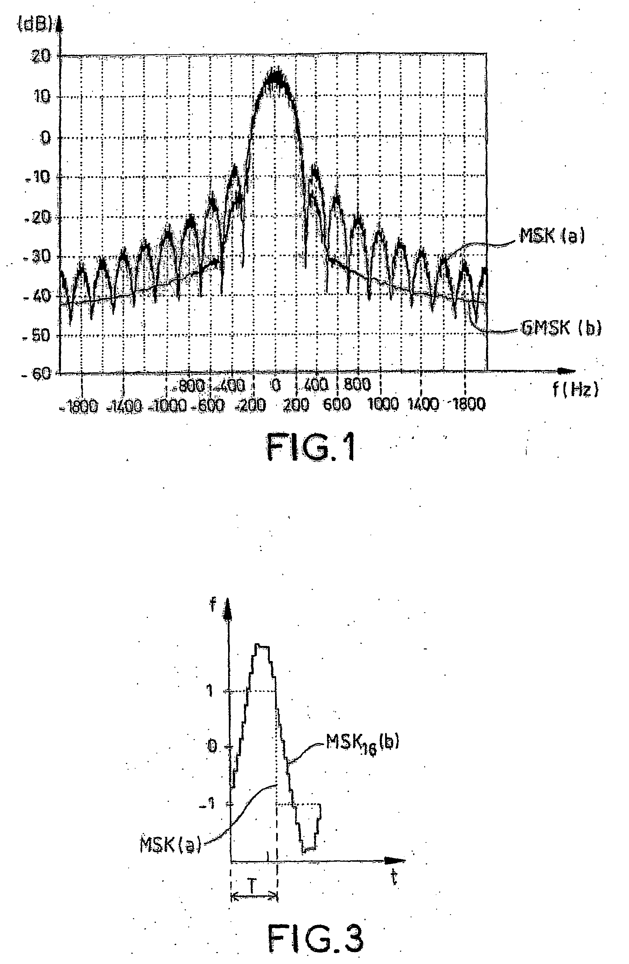

Or, on remarque que la courbe a) représentant figure 1 le spectre en fréquence d'une modulation MSK à 400 bauds, présente à 1000 Hz un lobe latéral situé à environ -38 dB du lobe central, alors que l'on souhaite qu'il soit situé à environ -50 dB.

Une solution consiste à faire précéder la modulation de fréquence MSK d'un filtrage passe-bas gaussien. Il s'agit alors d'une modulation à gradient de phase minimum gaussienne, ou « GMSK » en anglais dont le spectre en fréquence est représenté par la courbe b) de la figure 1. L'occupation spectrale est mieux adaptée que dans le cas de la modulation « MSK » mais la modulation GMSK introduit une diaphonie inter symboles indésirable.

On rappelle que la diaphonie inter symboles consiste à ce que la réception des données (aussi désignées par symboles) soit brouillée par la réception simultanée de la donnée correcte et d'une traînée de la donnée précédente voire de l'avant-dernière.

Un but important de l'invention est donc de proposer un procédé et un dispositif présentant une occupation spectrale équivalente à celle présentée par la modulation GMSK, sans introduire de diaphonie inter symboles.

Un autre but de l'invention est de proposer un procédé facile à mettre en oeuvre.

Pour atteindre ces buts, l'invention propose un procédé de transmission de données numériques présentant une cadence T au moyen d'un modulateur de fréquence apte à moduler en fonction des données, une fréquence porteuse centrale f0 à une première valeur de fréquence f0+1/4T et/ou une deuxième valeur de fréquence f0-1/4T ce procédé étant **caractérisé en ce qu'**il comporte l'étape consistant à moduler la fréquence porteuse centrale f0 d'une des valeurs de fréquence à l'autre pendant un intervalle de temps T, par paliers de fréquence successifs.

Ainsi au lieu de passer directement d'une première valeur de fréquence correspondant à une première valeur de donnée, à une deuxième valeur de fréquence correspondant à une deuxième valeur de donnée, on passe de la première fréquence à la deuxième par paliers de fréquence successifs.

Le spectre en fréquence correspondant à ces changements de fréquence par paliers présente une décroissance plus rapide que le spectre d'une modulation « MSK ».

Ce changement de fréquence par paliers présente en outre l'avantage de consommer moins d'énergie en haute fréquence que lors de changements instantanés de fréquences comme dans le cas de la modulation « MSK », ce gain d'énergie étant alors en partie reporté sur le lobe central du spectre, lui conférant ainsi une bande utile légèrement plus large que dans le cas d'une modulation « MSK » avec pour conséquence un gain sur le rapport signal/bruit par rapport au « MSK », à conditions identiques.

Selon une caractéristique de l'invention, les paliers de fréquence pour passer de f0 - 1/4T à f0 + 1/4T sont les mêmes en valeur absolue que les paliers de fréquence pour passer de f0 + 1/4T à f0 - 1/4T.

Le nombre de paliers de fréquence pour passer d'une des valeurs de fréquence à l'autre est de préférence égal à 16.

Le procédé s'applique notamment lorsque les données numériques sont transmises entre une station de référence et un mobile d'un système de positionnement par satellites.

L'invention a aussi pour objet non seulement le procédé de transmission de données dont les grandes lignes viennent d'être décrites, mais aussi un dispositif apte à mettre en forme une modulation de fréquences à une cadence T selon deux fréquences prédéterminées. Ce dispositif comporte des moyens de mise en forme de ladite modulation en plusieurs paliers de fréquence pendant un intervalle de temps T.

Ce dispositif comporte un microprocesseur apte à programmer les paliers de fréquence et de préférence, relié au microprocesseur, un dispositif apte à mettre en forme la modulation en fonction des données à transmettre et des paliers programmés.

Enfin, l'invention a pour objet un modulateur de fréquences, **caractérisé en ce qu'**il comporte un dispositif apte à mettre en forme une modulation de fréquence tel que décrit et un dispositif de génération de fréquences instantanées.

D'autres caractéristiques et avantages de l'invention apparaîtront à la lecture de la description détaillée qui suit et qui est faite en référence aux dessins annexés dans lesquels :

- les courbes schématiquement représentées figure 1 illustrent la variation du spectre en fréquence d'un modulateur de type « MSK » (courbe a) et « GMSK » (courbe b) ;
- les figures 2a) 2b) et 2c) représentent schématiquement en fonction du temps t, respectivement un exemple de données binaires à transmettre, et les modulations de fréquence et de phase correspondantes ;
- la figure 3 représente schématiquement en fonction du temps t, les modulations de fréquence correspondant à un signal d'entrée comportant les données -1, 1, -1 pour une modulation « MSK » classique (courbe a) et pour un exemple de modulation selon l'invention désignée par « MSK16 » (courbe b) ;
- la figure 4 représente schématiquement en fonction du temps t, les modulations « MSK » (courbe a) et « MSK16 » (courbe b) pour un signal d'entrée comportant les données -1, 1, 1, -1, 1, 1, -1, 1, -1, 1 ;
- la figure 5 représente schématiquement en fonction du temps, les variations de phase correspondant aux modulations « MSK » (courbe a) et « MSK16 » (courbe b) pour un signal d'entrée comportant les données -1, 1, 1, -1, 1, 1, -1, 1, -1, 1 ;
- la figure 6 représente schématiquement les spectres en fréquence d'une modulation « MSK » à 400 bauds (courbe a) et d'une modulation « MSK16 » à 400 bauds (courbe b) ;
- la figure 7 représente schématiquement un exemple de dispositif apte à mettre en oeuvre le procédé selon l'invention.

La modulation de fréquence selon l'invention est basée sur une modulation de type « MSK ».

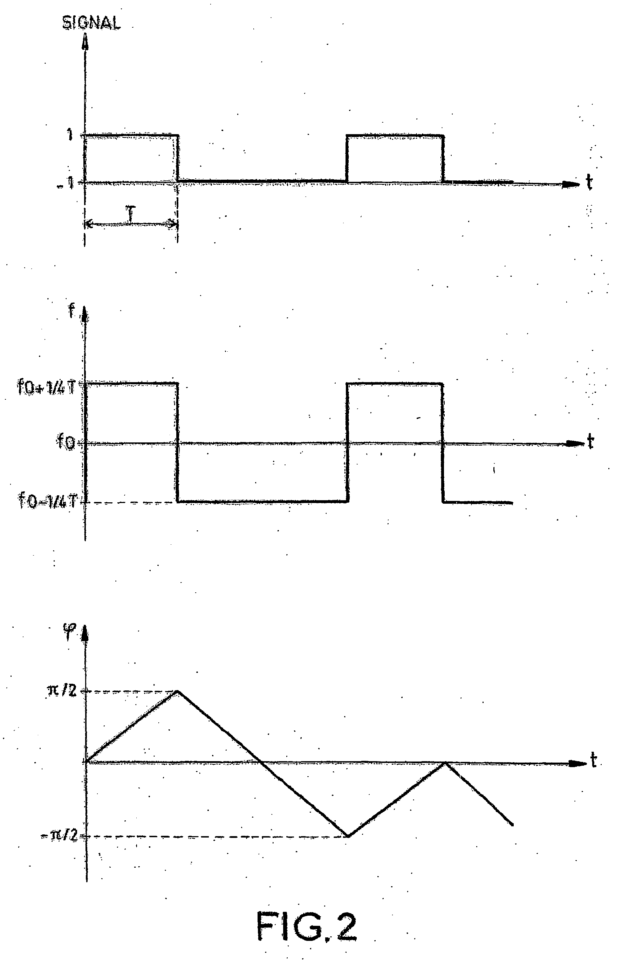

On rappelle brièvement, sur la base d'un exemple décrit en relation avec les figures 2a) 2b) et 2c), les particularités de la modulation de fréquence de type « MSK ».

Il s'agit bien sûr d'une modulation à amplitude constante.

Les données binaires à transmettre, représentées figure 2a), ont chacune une durée T aussi dénommée cadence des données. Comme représenté figure 2b), chaque donnée est transmise en fréquence, pendant une durée T selon les caractéristiques suivantes :

a) +1 est représenté par la première fréquence f0+1/4T,
b) -1 est représenté par la deuxième fréquence f0-1/4T,

f0 étant la fréquence porteuse centrale.

A cette modulation de fréquence on peut associer sur la durée T, une variation de la phase selon la formule suivante :

$$\varphi = \int_0^T 2\pi f(t) dt \qquad\qquad (1)$$

L'écart 1/4T est choisi de manière à ce que la phase φ correspondante, représentée figure 2c), varie linéairement entre -π/2 et π/2.

A la réception, la démodulation en phase est souvent préférée à la démodulation en fréquence.

Le procédé selon l'invention consiste à passer d'une fréquence à l'autre selon des paliers successifs de manière à atteindre la fréquence souhaitée ( f0 ± 1/4T ) au bout de la durée T. Ainsi, la phase φ correspondante atteint-elle au bout d'un temps T la même valeur ( ± π/2) que dans le cas d'une modulation « MSK » ; cela permet à la réception de démoduler en phase les données reçues qu'elles aient été modulées selon la modulation « MSK » classique ou selon l'invention.

Dans la suite on considère un exemple de modulation de fréquence avec 16 paliers de fréquences, la fréquence porteuse f0 prenant des valeurs entre 1.6 et 3.5 MHz en particulier 1.8146 MHz, la cadence T correspondant à 400 Hz et 1/4T étant égal à 100 Hz. Les données ainsi modulées dans cette gamme HF (Haute Fréquence) sont transmises au moyen d'une antenne adaptée, en l'occurrence une grande antenne.

Le nombre de paliers peut prendre d'autres valeurs comme par exemple 8 ou 32.

On a illustré figure 3 cet exemple de modulation de fréquence pour un signal d'entrée comportant les données -1, 1, -1. La courbe a) correspond à la modulation « MSK » classique et présente deux états de fréquence ; la courbe b) correspond à la modulation selon l'invention désignée par « MSK16 » car la modulation est mise en forme en 16 paliers de fréquence.

Concernant la courbe « MSK16 » (b), la fréquence f0 + 1/4T rapportée sur la figure à +1 est atteinte au 16éme palier ; de même la fréquence f0 - 1/4T rapportée sur la figure à -1 est atteinte au 16éme palier. Pour qu'un récepteur apte à démoduler des données modulées selon une modulation « MSK » soit compatible avec une modulation selon l'invention, « MSK16 » par exemple, il faut que la phase soit égale à ± π/2 au bout du temps T. C'est pourquoi, compte tenu de la relation (1), certains paliers de fréquence dépassent (en valeur absolue) la fréquence à atteindre.

La courbe « MSK16 » (b) qui, pour passer de la fréquence -1 à la fréquence +1 avec une variation de phase égale à ± π/2, présente 16 paliers de fréquences de la forme $k_i$ x (1/4T), i variant de 1 à 16, a été obtenue avec les coefficients $k_i$ suivants :

| | | | |
|---|---|---|---|
| -0.703 | -0.413 | -0.12 | +0.173 |
| +0.466 | +0.76 | +1.053 | +1.346 |
| +1.64 | +1.933 | +2.226 | +2.053 |
| +1.791 | +1.528 | +1.266 | +1 |

De même, les 16 paliers de fréquence pour passer de +1 à -1 ont été obtenus avec les coefficients opposés :

| | | | |
|---|---|---|---|
| +0.703 | +0.413 | +0.12 | -0.173 |
| -0.466 | -0.76 | -1.053 | -1.346 |
| -1.64 | -1.933 | -2.226 | -2.053 |
| -1.791 | -1.528 | -1.266 | -1 |

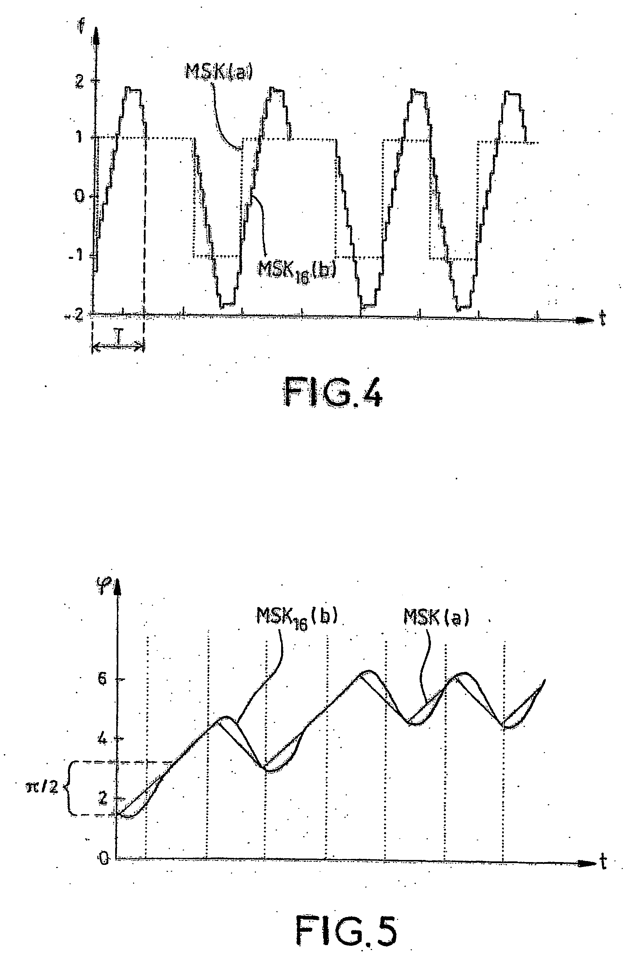

Bien sûr, comme dans le cas du « MSK », la fréquence reste stable lorsque les données ne changent pas ; on a illustré figure 4 les modulations « MSK » (courbe a) et « MSK16 » (courbe b) pour un signal d'entrée comportant les données -1, 1, 1, -1, 1, 1, -1, 1, -1, 1. Les différences entre ces deux courbes n'apparaissent qu'aux changements de fréquence.

Les variations de phase de ce signal d'entrée sont illustrées figure 5 : les courbes a et b correspondant respectivement aux modulations « MSK » et « MSK16 ». Les phases varient de ± π/2 sur T dans les deux cas, la phase de la courbe b) prenant tout d'abord un léger retard sur celle de la courbe a) pour la rattraper ensuite.

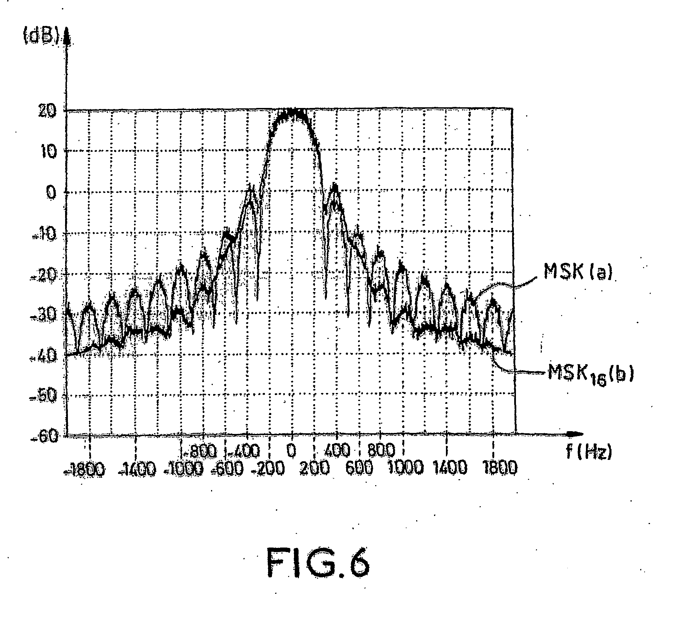

Le spectre en fréquence d'une modulation « MSK16 » à 400 bauds présente comme illustré figure 6, courbe b une décroissance plus rapide que le spectre d'une modulation « MSK » à 400 bauds également, illustré par la courbe a. A 1000 Hz, on obtient bien un lobe latéral situé à environ -50 dB du lobe central et les lobes latéraux sont beaucoup moins marqués.

Ce changement de fréquence par paliers présente en outre l'avantage de consommer moins d'énergie en haute fréquence que lors de changements instantanés de fréquences comme dans le cas de la modulation « MSK », ce gain d'énergie étant alors en partie reporté sur le lobe central du spectre qui est plus plat dans le cas de la modulation « MSK16 » que dans celui de la modulation « MSK » et lui confère ainsi une bande utile légèrement plus large et de ce fait un rapport signal/bruit plus élevé d'environ 2 dB, à conditions identiques.

Comme on l'a vu, côté réception, une démodulation classique, en phase ou en fréquence, correspondant à une modulation « MSK » peut être réalisée.

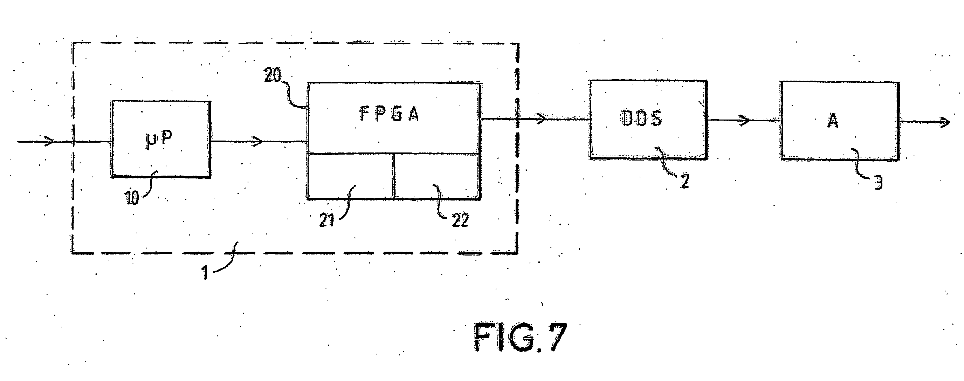

Comme représenté figure 7, le procédé selon l'invention est mis en oeuvre par un modulateur comportant un dispositif 1 de mise en forme de la modulation en 16 paliers, relié à un dispositif 2 apte à générer la fréquence instantanée en utilisant par exemple une fonction « DDS », acronyme anglo-saxon pour « Direct Digital Synthesis », ce dispositif étant lui-même relié à un amplificateur de puissance 3. Lorsque la fréquence porteuse se situe dans une gamme de fréquences autre que la gamme HF, on peut éventuellement ajouter entre le dispositif 2 et l'amplificateur 3, un circuit de transposition de fréquence.

Le dispositif 1 de mise en forme de la modulation en 16 paliers de fréquence comporte des moyens 10 de programmation des 16 paliers, inclus par exemple dans un microprocesseur, ces moyens 10 étant reliés à des moyens 20 de mise en forme de la modulation en fonction des données à transmettre et des paliers de fréquence tels que programmés.

Ces moyens 20 de mise en forme de la modulation peuvent être inclus dans le microprocesseur.

Ces moyens 20 de mise en forme de la modulation comprennent de préférence un « FPGA », acronyme anglo-saxon pour « Field Programable Gate Array », relié au microprocesseur. Le « FPGA » comprend d'une part et de manière traditionnelle, des moyens 21 pour adapter temporellement les données à transmettre et d'autre part des moyens 22 pour fournir au dispositif de type « DDS » les instructions pour générer les fréquences correspondant aux données modulées selon une modulation « MSK16 ».

Un tel modulateur qui permet d'obtenir un spectre en fréquence présentant les mêmes avantages que celui obtenu par un modulateur de type « GMSK », est cependant plus simple de conception dans la mesure où il n'utilise pas de filtre gaussien.

De plus, en éliminant le filtre gaussien, il élimine la partie correspondante de traitement (filtrage) analogique des données, ce qui simplifie globalement le réglage et la fiabilité du modulateur.

En outre, il ne présente pas de diaphonie inter symboles.

## Revendications

1.  Procédé de transmission de données numériques présentant une cadence T au moyen d'un modulateur de fréquence apte à moduler en fonction des données, une fréquence porteuse centrale f0 à une première valeur de fréquence f0+1/4T et/ou une deuxième valeur de fréquence f0-1/4T, **caractérisé en ce qu'**il comporte l'étape consistant à moduler la fréquence porteuse centrale f0 d'une des valeurs de fréquence à l'autre pendant un intervalle de temps T, par paliers de fréquence successifs.

2.  Procédé selon la revendication précédente, **caractérisé en ce que** le nombre de paliers de fréquence pour passer de f0 - 1/4T à f0 + 1/4T est le même que pour passer de f0 + 1/4T à f0 - 1/4T.

3.  Procédé selon la revendication précédente, **caractérisé en ce que** les paliers de fréquence pour passer de f0 - 1/4T à f0 + 1/4T sont les mêmes en valeur absolue que les paliers de fréquence pour passer de f0 + 1/4T à f0 - 1/4T.

4.  Procédé selon l'une quelconque des revendications précédentes, **caractérisé en ce que** le nombre de paliers de fréquence pour passer d'une des valeurs de fréquence à l'autre est égal à 16.

5.  Procédé selon l'une quelconque des revendications précédentes, **caractérisé en ce que** les données numériques sont transmises entre une station de référence et un mobile d'un système de positionnement par satellites.

6.  Dispositif apte à mettre en forme une modulation de fréquence à une cadence T selon deux fréquences prédéterminées, **caractérisé en ce qu'**il comporte des moyens de mise en forme de ladite modulation en plusieurs paliers de fréquence pendant un intervalle de temps T.

7.  Dispositif selon la revendication précédente, **caractérisé en ce qu'**il comporte un microprocesseur apte à programmer les paliers de fréquence.

8.  Dispositif selon la revendication précédente, **caractérisé en ce qu'**il comporte en outre, relié au microprocesseur, un dispositif de type « FPGA » apte à mettre en forme la modulation en fonction de données à transmettre et des paliers programmés.

9. Modulateur de fréquences, **caractérisé en ce qu'**il comporte un dispositif apte à mettre en forme une modulation de fréquence selon l'une quelconque des revendications 6 à 8 et, relié à celui-ci, un dispositif de génération de fréquences instantanées utilisant une fonction « DDS ».

## Claims

1. A method of transmission of digital data having a rate T by means of a frequency modulator capable of modulating, as a function of data, a central carrier frequency f0 at a first frequency value f0+1/4T and/or at a second frequency value f0-1/4T, **characterized in that** it comprises the step consisting in modulating the central carrier frequency f0 from one of the frequency values to the other during a time interval T, by successive frequency steps.

2. The method of the preceding claim, **characterized in that** the number of frequency steps for transiting from f0-1/4T to f0+1/4T is the same as for transiting from f0+1/4T to f0-1/4T.

3. The method of the preceding claim, **characterized in that** the frequency steps for transiting from f0-1/4T to f0+1/4T are the same in absolute value as the frequency steps for transiting from f0+1/4T to f0-1/4T.

4. The method of any of the preceding claim, **characterized in that** the number of frequency steps for transiting from one of the frequency values to the other is equal to 16.

5. The method of any preceding claims **characterized in that** the digital data are transmitted between a reference station and a mobile of a satellite positioning system.

6. A device capable of forming a frequency modulation at a rate T according to two predetermined frequencies, **characterized in that** it comprises means for forming said modulation into a plurality of frequency steps during a time interval T.

7. The device of the preceding claim, **characterized in that** it comprises a microprocessor capable of programming the frequency steps.

8. The device of the preceding claim, **characterized in that** it further comprises, connected to the microprocessor, an "FPGA" type device capable of forming the modulation as a function of the data to be transmitted, and of the programmed steps.

9. A frequency modulator **characterized in that** it comprises a device capable of forming a frequency modulation according to any of the claims 6 to 8 and, connected thereto, an instantaneous frequency generation device, using a "DDS" function.

## Patentansprüche

1. Ein Verfahren zur Übertragung bzw. Sendung von Digitaldaten mit einer Rate T mittels eines Frequenzmodulators, der in der Lage ist, eine zentrale Trägerfrequenz f0 mit einem ersten Frequenzwert f0+1/4T und/oder mit einem zweiten Frequenzwert f0-1/4T als eine Funktion von Daten zu modulieren, das **dadurch gekennzeichnet ist, dass** es den Schritt aufweist, der aus dem Modulieren der zentralen Trägerfrequenz f0 von einem der Frequenzwerte auf einen anderen während eines Zeitintervalls T besteht, und zwar durch aufeinanderfolgende Frequenzschritte.

2. Verfahren nach dem vorhergehenden Anspruch, das **dadurch gekennzeichnet ist, dass** die Anzahl der Frequenzschritte für den Übergang von f0-1/4T zu f0+1/4T die gleiche ist wie für den Übergang von f0+1/4T zu f0-1/4T.

3. Verfahren nach dem vorhergehenden Anspruch, das **dadurch gekennzeichnet ist, dass** die Frequenzschritte für den Übergang von f0-1/4T zu f0+1/4T vom absoluten Wert her die gleichen sind wie die Frequenzschritte für den Übergang von f0+1/4T zu f0-1/4T.

4. Verfahren nach einem der vorhergehenden Ansprüche, das **dadurch gekennzeichnet ist, dass** die Anzahl der Frequenzschritte für den Übergang von einem der Frequenzwerte zu einem anderen gleich 16 ist.

5. Verfahren nach einem der vorhergehenden Ansprüche, das **dadurch gekennzeichnet ist, dass** die Digitaldaten zwischen einer Referenzstation und einer Mobileinheit eines Satellitenpositionssystems gesendet werden.

6. Eine Vorrichtung, die in der Lage ist, eine Frequenzmodulation mit einer Rate T gemäß zwei vorbestimmten Frequenzen zu bilden, die **dadurch gekennzeichnet ist, dass** sie Mittel aufweist, um die Modulation in einer Vielzahl von Frequenzschritten während eines Zeitintervalls T zu bilden.

7. Vorrichtung nach dem vorhergehenden Anspruch, die **dadurch gekennzeichnet ist, dass** sie einen Mikroprozessor aufweist, der in der Lage ist, die Frequenzschritte zu programmieren.

8. Vorrichtung nach dem vorhergehenden Anspruch, die **dadurch gekennzeichnet ist, dass** sie weiter eine "FPGA"-Vorrichtung verbunden mit dem Mikroprozessor aufweist, die in der Lage ist, die Modulation als eine Funktion der Daten, die gesendet werden sollen und der programmierten Schritte zu bilden.

9. Ein Frequenzmodulator, der **dadurch gekennzeichnet ist, dass** er eine Vorrichtung aufweist, die in der Lage ist, eine Frequenzmodulation gemäß einem der Ansprüche 6 bis 8 zu bilden, und damit verbunden eine Vorrichtung zur Generierung der Momentan- bzw. Augenblicksfrequenz, die eine "DDS"-Funktion verwendet.

FIG.1

FIG.3

FIG.2

FIG.4

FIG.5

FIG.6

FIG.7

**EP 1 477 004 B1**

## RÉFÉRENCES CITÉES DANS LA DESCRIPTION

**Documents brevets cités dans la description**

- US 5216391 A